# EUROPEAN PATENT APPLICATION

(11) **EP 4 049 807 A1**
(43) Date of publication of application: **31.08.2022**
(21) Application number: 22156287.9
(22) Date of filing: 11.02.2022
(51) Int. Cl.: B25J 9/16, B05B 12/00, B25J 11/00, B05B 13/04

(54) **COATING CONTROL APPARATUS, COATING CONTROL SYSTEM, SETTING APPARATUS FOR COATING CONTROL APPARATUS, CONTROL METHOD, NON-TRANSITORY COMPUTER READABLE STORAGE MEDIUM, AND PROGRAM**

(30) Priority: 26.02.2021 JP 2021030566
(71) Applicant: Kabushiki Kaisha Yaskawa Denki, Kitakyushu-shi, Fukuoka 806-0004 (JP)
(72) Inventor: NAKATA, Tatsuya, Kitakyushu-shi, 806-0004 (JP); KIKUCHI, Kenta, Kitakyushu-shi, 806-0004 (JP); WATANABE, Yuki, Kitakyushu-shi, 806-0004 (JP); TAJIMA, Sho, Kitakyushu-shi, 806-0004 (JP); ITO, Tsuyoshi, Kitakyushu-shi, 806-0004 (JP)
(74) Representative: Viering, Jentschura & Partner mbB Patent- und Rechtsanwälte

(57) **Abstract**

A coating control apparatus includes an operation control unit configured to control a coating device whose position and orientation are controlled by a robot in accordance with a command from a robot control apparatus, a robot information acquisition unit configured to acquire, from the robot control apparatus, robot data indicating an operation state of the robot, and a data processing unit configured to relate coating data which indicates an operation state of the coating device to the robot data.

## Description

### TECHNICAL FIELD

The present disclosure relates to a coating control apparatus, a coating control system, a setting apparatus for the coating control apparatus, a coating control method, a non-transitory computer readable storage medium, and a program.

### BACKGROUND ART

Patent Document 1 discloses an analysis device for analyzing the cause of generation of coating particles, which are coating defects appearing as protrusions on a coating surface.

### PRIOR ART DOCUMENTS

### PATENT DOCUMENT

Japanese Patent Application Laid-Open Publication No. 2019-192131

### SUMMARY OF THE INVENTION

### PROBLEMS TO BE SOLVED BY THE INVENTION

The present disclosure provides a coating control apparatus, a coating control system, a setting apparatus for the coating control apparatus, a control method, and a program useful for efficient data processing.

### MEANS FOR SOLVING PROBLEMS

According to one aspect of the present invention, a coating control apparatus includes an operation control unit configured to control a coating device whose position and orientation are controlled by a robot in accordance with a command from a robot control apparatus, a robot information acquisition unit configured to acquire, from the robot control apparatus, robot data indicating an operation state of the robot, and a data processor configured to relate coating data which indicates an operation state of the coating device to the robot data.

According to another aspect of the present invention, a coating control system includes the coating control apparatus, the robot control apparatus, and a monitoring apparatus which includes a storage unit and is configured to monitor a state of coating performed by the coating device based on the coating data and the robot data stored in the storage unit.

According to further aspect of the present invention, a setting apparatus for a coating control apparatus includes an apparatus designation unit configured to select, based on a user input, a control target apparatus among a plurality of coating apparatuses that includes different devices; an item setting unit configured to select, based on a user input, a target data item among a plurality of data items in accordance with the control target apparatus selected by the apparatus designation unit, data of the target data item being acquired; and setting transmission unit configured to transmit a designation result by the apparatus designation unit and a setting result by the item setting unit to a coating control apparatus which is configured to control the plurality of coating apparatuses.

According to further aspect of the present invention, a coating control method includes controlling a coating device whose position and orientation are controlled by a robot in accordance with a command from robot control apparatus; acquiring, from the robot control apparatus, robot data indicating an operation state of the robot; and relating coating data which indicates an operation state of the coating device to the robot data.

According to further aspect of the present disclosure, a program for causing a computer to execute the control method.

According to the other aspect of the present invention, a non-transitory computer readable storage medium retrievably storing a computer-executable program therein, the computer-executable program causing a computer to perform the coating control method.

### Effects of the Invention

According to the present disclosure, there are provided a coating control apparatus, a coating control system, a setting apparatus for the coating control apparatus, a control method, and a program which are useful for efficient data processing.

### BRIEF DESCRIPTION OF THE DRAWINGS

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 is a schematic view showing an example of the configuration of the coating facility.
FIG. 2 is a block diagram showing an example of the structure of the control system.
FIG. 3 is a block diagram showing an example of the hardware configuration of the control system.
FIG. 4 is a sequence diagram showing an example of a setting method by the setting apparatus.
FIG. 5 is a schematic view showing an example of an input image for setting.
FIGS. 6A and 6B are schematic views showing an example of input/output setting images.
FIG. 7 is a schematic view showing an example of an input image for operation setting.
FIG. 8 is a schematic view showing an example of an input image for setting collected data.
FIG. 9 is a flowchart showing an example of a control method by the coating control apparatus.
FIG. 10 is a flowchart showing an example of a monitoring method by the monitoring device.
FIG. 11 is a block diagram showing another example of the structure of control system.

### DESCRIPTION OF THE EMBODIMENTS

Hereinafter, one embodiment will be described with reference to the drawings. In the description, the same elements or elements having the same function are denoted by the same reference numerals, and redundant description is omitted.

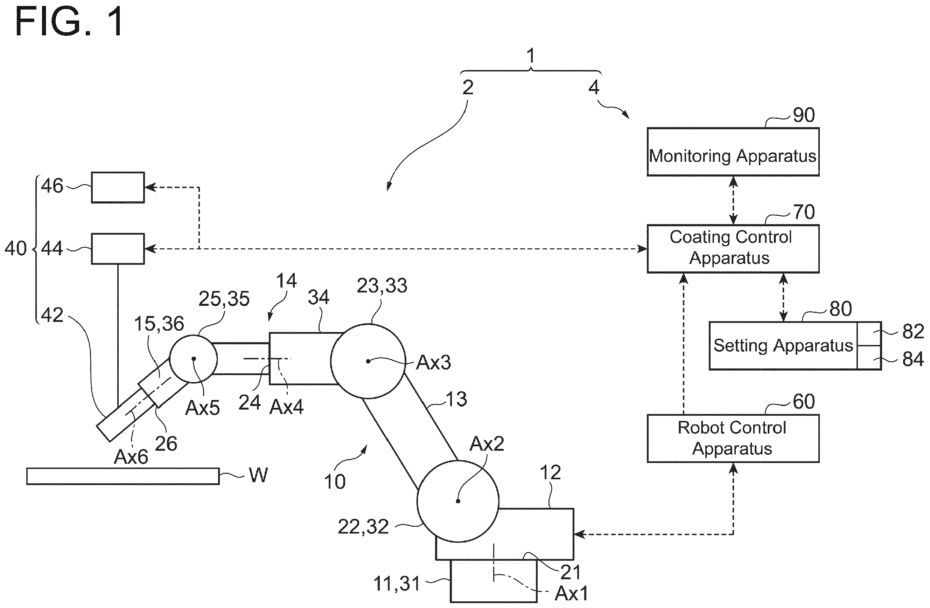

The coating facility shown in FIG. 1 includes an object to be coated (hereinafter referred to as a "workpiece W"). This is an equipment for automatically carrying out at least a part of the coating work. In addition to the coating operation, the coating facility may record and monitor the results of the coating operation. The workpiece W may be any industrial product or a part thereof, and specific examples include a body of an automobile and a case of a cellular phone. The coating facility 1 comprises a coating system and a control system (coating control system).

### [Coating System]

The coating system 2 is a system for performing coating on the workpiece W. The coating system 2 includes a robot 10 and a coating apparatus 40. Some of the equipment of the robot 10 and the coating apparatus 40 may be located in a partitioned area (within the coating booth) for performing the coating operation.

The robot 10 is, for example, a six-axis vertical articulated robot having a base portion 11, a turning portion 12, a first arm 13, a second arm 14, a wrist portion15, and actuators 31, 32, 33, 34, 35, 36.

The base portion 11 may be fixed to a floor surface, a pedestal having a linear motion mechanism, or the like, and may be installed on a sidewall or a ceiling forming the coating booth. The robot 10 may include a holding portion for holding the workpiece W while adjusting the posture of the workpiece W, and the base portion 11 may be provided on the holding portion. The turning portion 12 is provided on the base portion 11 and is rotatable about a vertical axis Ax1. That is, the robot 10 has a joint 21 capable of rotating the turning portion 12 about the axis Ax1.

The first arm 13 extends from the turning portion 12 and is rotatable about an axis Ax2 intersecting (e.g., orthogonal to) the axis Ax1. That is, the robot 10 has a joint 22 that allows the first arm 13 to rotate about an axis Ax2. Here, the intersection includes an intersection in a state in which they are in a twisted relationship with each other, such as a multi-level crossing. The same applies hereinafter.

The second arm 14 extends from the tip portion of the first arm 13 and is rotatable about an axis Ax3 intersecting (e.g., orthogonal to) the axis Ax1. That is, the robot 10 has a joint 23 that allows the second arm 14 to rotate about an axis Ax3. The axis Ax3 may be parallel to the axis Ax2. The tip portion of the second arm 14 is rotatable about an axis Ax4 intersecting (e.g., orthogonal to) the axis Ax3 along the extending direction of the second arm 14. That is, the robot 10 has a joint 24 capable of rotating the tip portion of the second arm 14 about an axis Ax4.

The wrist portion 15 extends from tip portion of the second arm 14 and is rotatable about an axis Ax5 intersecting (e.g., orthogonal to) the axis Ax4. That is, the robot 10 has a joint 25 that allows the wrist porfion15 to rotate about an axis Ax5. A tool to be operated is provided at the tip portion of the wrist portion 15, and the tool is rotatable about an axis Ax6 intersecting (e.g., orthogonal to) the axis Ax5 along the extending direction of the wrist portion 15. That is, the robot 10 has a joint 26 capable of rotating a tool to be operated about an axis Ax6. The tool to be operated is a coating device 42 to be described later which functions as a gun for discharging coating material.

The actuators 31, 32, 33, 34, 35, 36 each drive the joints 21,22, 23, 24, 25, 26. For example, the actuator 31 rotates the turning portion 12 about the axis Ax1, the actuator 32 rotates the first arm 13 about the axis Ax2, and the actuator 33 rotates the second arm 14 about the axis Ax3. Actuator 34 rotates the tip portion of second arm 14 about axis Ax4, actuator 35 rotates wrist porfion15 about axis Ax5, and actuator 36 rotates the tool to be operated about axis Ax6.

The robot 10 can be configured in any way as long as the position and orientation of the tool to be operated (the position and orientation with respect to the workpiece W) can be changed within a desired range. For example, the robot 10 may be a seven-axis vertical articulated robot in which a redundant axis is added to the 6-axis vertical articulated robot described above.

The coating apparatus is an apparatus for supplying coating material to the workpiece W in conjunction with the robot 10. The coating apparatus 40 may discharge coating material in any manner, such as using a spray gun, using a so-called bell gun having a bell cup (rotary atomizing head), or using a bell gun to which a coating cartridge is mounted. The coating apparatus 40 includes, for example, a coating device 42, a driving device 44, and a peripheral device 46.

The coating device 42 is a coating gun for discharging coating material. The coating device 42 is attached to the tip portion of the wrist portion15 of the robot 10. As a result, the position and orientation of the coating device 42 with respect to the workpiece W are changed by the operation of the robot 10. When the coating device 42 is a bell gun, the coating device 42 includes, for example, a bell cup and an air-driven motor for rotating the bell cup.

The driving device 44 is a device for driving the coating device 42 so as to discharge coating material. The coating apparatus 40 may have a plurality of driving devices 44. The plurality of driving devices 44 include, for example, a device for supplying paint to the coating device 42, a device for supplying fluid for discharging coating material from the coating device 42, a device for supplying air to the motor, and a device for applying a voltage to at least one of the coating devices 42 and the workpiece W. A part of the driving device 44 may be provided in the coating booth, for example, on the arm of the robot 10. Other portions of the driving device 44 may be provided outside the coating booth.

The peripheral device 46 is a device for assisting the coating operation by the coating device 42 and the driving device 44. The coating apparatus 40 may include a plurality of peripheral devices 46. The plurality of peripheral devices 46 include, for example, devices for conveying a cartridge mounted on a cartridge bell gun, devices for controlling temperature or humidity in a coating booth, and devices for controlling airflow in a coating booth.

The coating device 42, the driving device 44, and the peripheral device 46 include various devices to be controlled by the control system 4. The apparatus to be controlled includes at least a device which operates based on the operation command by the control system 4. The apparatus to be controlled may include a device for outputting a sensor value to the control system 4 and a device controller for executing control based on an operation command by the control system 4. In the present disclosure, devices to be controlled by the control system 4 are collectively referred to as "constituent devices 50". That is, the coating apparatus 40 has a plurality of constituent devices 50.

Specific examples of the constituent device 50 include a valve, an electro-pneumatic regulator, a servo motor, a controller for controlling a power supply for applying a voltage, a pressure sensor, a rotation sensor (fiber sensor), and a flow rate sensor. The valve may be a solenoid valve or an air operation valve, and specific examples thereof include a valve for switching the discharge state (on/off) of coating material and a valve for switching the supply state (on/off) of a fluid such as air. The valve transitions to an open state (closed state) in response to a control command value indicating a transition to an open state (closed state), for example. The electro-pneumatic regulator adjusts the pressure of air for rotating the motor in the bell gun in response to, for example, a control command value. The coating apparatus 40 may have a plurality of constituent devices 50 of the same type, and these constituent devices 50 may be used in different applications. The constituent device 50 described above is an example, and may be any type of device as long as it is controlled by the control system 4.

### [Control System]

The control system 4 controls the coating system 2 so as to perform coating on the workpiece W, and records and monitors the results of the coating operation performed by the coating system 2. As shown in FIG. 1, the control system 4 includes, for example, a robot control apparatus (an example of "robot control circuitry") 60, a coating control apparatus 70, a setting apparatus 80, and a monitoring apparatus 90. A robot control apparatus 60, a setting apparatus 80, and a monitoring apparatus 90 are communicatively connected to the coating control apparatus 70. Each device will be described in detail below.

### (Robot control apparatus)

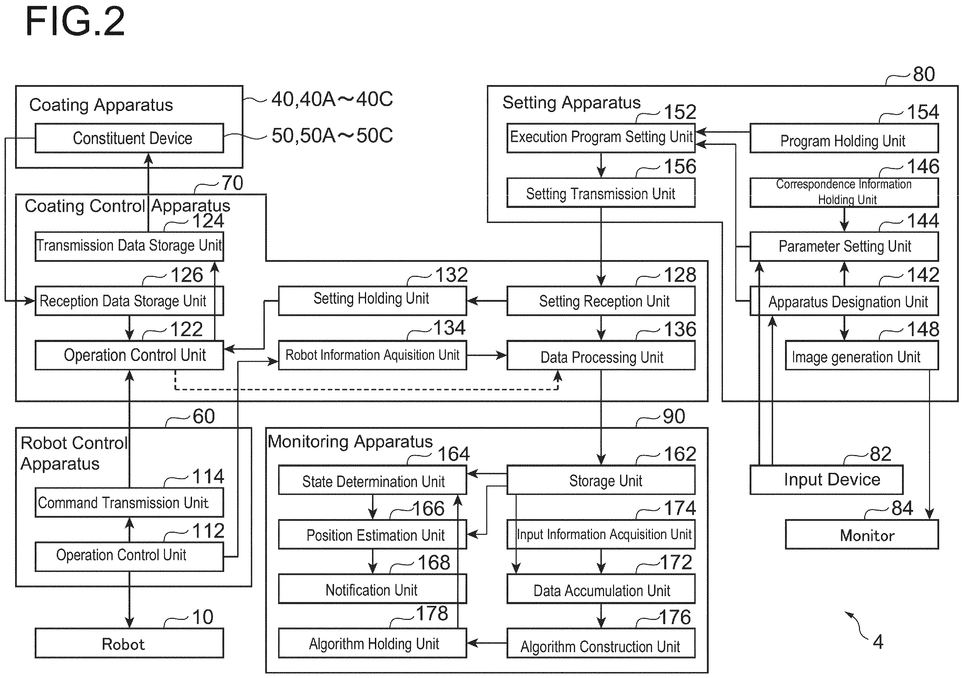

The robot control apparatus 60 is a controller for controlling the robot 10. The robot control apparatus 60 controls the robot 10 so that the coating material discharged by the coating apparatus adheres to the workpiece W. The robot control apparatus 60 has a structure (hereinafter referred to as a "module"). For example, as shown in FIG. 2, an operation control unit 112 and a command transmission unit 114 are provided. The processes performed by these modules correspond to the processing executed by the robot control apparatus 60.

The operation control unit 112 changes the position and orientation of the coating device 42 with respect to the workpiece W so that the coating material discharged by the coating device 42 of the coating apparatus is supplied to the workpiece W (adheres to the workpiece W). In one example, a plurality of coating paths representing a locus of a region to which the coating material is adhered are set in advance on the workpiece W. The operation control unit 112 changes the position and posture of the coating device 42 so that the coating material adhesion area discharged from the coating device 42 moves along the coating path. More specifically, the operation control unit 112 calculates the target angles of the actuators 31 to 36 by inverse kinematics calculation based on the target position and the target attitude of the coating device 42 determined so that the coating material is supplied along the coating path. Then, the operation control unit 112 controls each actuator so that the angles of the actuators 31 to 36 follow the calculated target angle.

The command transmission unit 114 transmits a discharge command to the coating control apparatus 70. For example, when coating is started in one coating path (immediately before), the command transmission unit 114 transmits a command indicating the start of ejection to the coating control apparatus 70. Before coating on one coating path is started and finished, the command transmission unit 114 transmits a command indicating the stop of ejection to the coating control apparatus 70. The discharge command may include at least one of information indicating the color used for coating and information indicating the level of the discharge amount of the coating material.

### (Coating control apparatus)

The coating control apparatus 70 is a controller for controlling the coating apparatus. The coating control apparatus 70 is configured to be capable of controlling a plurality of types of coating apparatuses 40. The plurality of types of coating apparatuses 40 have mutually different constituent devices 50. That is, the plurality of constituent devices 50 of one type of coating apparatus 40 are different from the plurality of constituent devices 50 of another type of coating apparatus 40. In one example, in a plurality of kinds of coating systems 2, at least the kinds of coating devices 42 are different from each other, and coating is performed in different manners.

Hereinafter, a case where the coating control apparatus 70 can control three kinds of coating apparatuses 40 will be exemplified, and each of the three kinds of coating apparatuses 40 will be referred to as a coating apparatus 40A, a coating apparatus 40B, and a coating apparatus 40C. The coating apparatus 40A, the coating apparatus 40B, and the coating apparatus 40C are different types of apparatuses. A plurality of constituent devices 50A (hereinafter referred to as "constituent devices 50A") included in the coating apparatus 40A is different from a plurality of constituent devices 50 (hereinafter referred to as "constituent devices 50B") included in the coating apparatus 40B. A plurality of constituent devices 50A included in the coating apparatus 40A is different from a plurality of constituent devices 50 (hereinafter referred to as "constituent devices 50C") included in the coating apparatus 40C. In the present disclosure, when the plurality of constituent devices 50 are different from each other among the coating apparatus, a case where all of the plurality of constituent devices are different and a case where a part of the plurality of constituent devices 50 is different are included.

The coating control apparatus 70 acquires information on an apparatus to be used (the coating apparatus to be controlled) and setting information corresponding to the apparatus from the setting apparatus 80, and controls the coating apparatus to be controlled based on the information. The coating control apparatus 70 includes, as a module, an operation control unit (an example of "operation control circuitry") 122, a plurality of transmission data storage units 124, a plurality of reception data storage units 126, a setting reception unit (an example of "operation control circuitry") 128, a setting holding unit 132, a robot information acquisition unit (an example of "robot information acquisition circuitry") 134, and a data processing unit (an example of "data processor") 136. The processes performed by these modules correspond to the processes performed by the coating control apparatus 70. In FIG. 2, one transmission data storage unit 124 out of the plurality of transmission data storage units 124 is shown, and one reception data storage unit 126 out of the plurality of reception data storage units 126 is shown.

Based on the information set by the setting apparatus 80, the operation control unit 122 controls one coating apparatus (hereinafter referred to as "control target apparatus") out of the plurality of types of coating apparatuses 40.). The control target apparatus is a coating apparatus instructed by the setting apparatus 80, and is a coating apparatus of a type to be actually operated. The operation control unit 122 controls the control target apparatus in accordance with one or more control programs set by the setting apparatus 80, for example. The operation control unit 122 controls the coating device 42 so as to move in accordance with an operation of the robot 10 in response to a discharge command from the robot control apparatus 60 (command transmission unit 114) which controls the robot 10 for changing the position and orientation of the coating device 42.

The plurality of transmission data storage units 124 store (temporarily hold) transmission data to the control target apparatus. In the plurality of transmission data storage units 124, control command values from the operation control unit 122 to the constituent device 50 are stored as transmission data. Specifically, based on the information set by the setting apparatus 80, a plurality of constituent devices 50 (a plurality of constituent devices 50 to which control command values are transmitted) included in the control target apparatus are allocated to the plurality of transmission data storage units 124, respectively. That is, any one of the constituent devices 50 is allocated to one transmission data storage unit 124, and a control command value for the constituent device 50 is stored therein. The transmission data stored in the transmission data storage unit 124 is transmitted to the corresponding constituent device 50 of the control target apparatus.

The plurality of reception data storage units 126 store (temporarily hold) reception data from the control target apparatus. In the plurality of reception data storage units 126, sensor values acquired from the constituent devices 50 are stored as reception data. In a specific example, a plurality of constituent devices 50 (a plurality of constituent devices 50 for outputting sensor values) included in the control target apparatus are allocated to the plurality of reception data storage units 126 based on information set by the setting apparatus 80. That is, one of the constituent devices 50 is allocated to one reception data storage unit 126, and sensor values from the constituent device 50 are stored therein. The sensor value output from the constituent device 50 of the control target apparatus is transmitted to the corresponding reception data storage unit 126.

The transmission data storage unit 124 and the reception data storage unit 126 described above function as communication units for transmitting and receiving data with the control target apparatus. When controlling the control target apparatus, the operation control unit 122 writes a control command value into the transmission data storage unit 124 and reads a sensor value from the reception data storage unit 126. Specifically, when outputting a control command value to one constituent device 50 of the control target apparatus, the operation control unit 122 writes the control command value in the transmission data storage unit 124 allocated to the constituent device 50. When receiving a sensor value from one constituent device 50 of the controlled target apparatus, the operation control unit 122 reads the sensor value from the reception data storage unit 126 allocated to the constituent device 50.

The setting reception unit 128 acquires, from the setting apparatus 80, designation information indicating which of the plurality of kinds of coating apparatuses 40 is designated as the control target apparatus and setting information set by the setting apparatus 80. The setting information includes information indicating a storage unit for writing a control command value to each constituent device 50 included in the control target apparatus among the plurality of transmission data storage units 124. The setting information includes information indicating a storage unit for reading a sensor value from each constituent device 50 of the control target apparatus among the plurality of reception data storage units 126. The setting information includes a target item (hereinafter referred to as a "target data item") for acquiring (collecting) data. The setting information includes values of parameters set by the user. The setting information may include one or more control programs set in accordance with the control target apparatus. The setting holding unit 132 holds designation information and setting information acquired from the setting apparatus 80.

The robot information acquisition unit 134 acquires data (hereinafter referred to as "robot data") indicating the operation state of the robot 10 linked to the coating device 42 of the control target apparatus from the robot control apparatus 60. The robot information acquisition unit 134 may acquire, from the operation control unit 112 of the robot control apparatus 60, robot data indicating the operation state of the robot 10 in the predetermined period. The robot information acquisition unit 134 may acquire, from the operation control unit 112 of the robot control apparatus 60, robot data indicating the operation state of the robot 10 each time coating is performed on one coating path.

The data processing unit 136 associates data (hereinafter referred to as "coating data") indicating the operation state of the coating device 42 of the control target apparatus and robot data acquired by the robot information acquisition unit 134 and stores the data in the storage unit 162. The coating data may include data corresponding to the target data item indicated by the setting information. The storage unit for storing data by the data processing unit 136 may be provided inside the coating control apparatus 70 or outside the coating control apparatus 70. In one example, the data processing unit 136 relates the coating data to the robot data and stores the data in the storage unit 162 (storage unit 162 to be described later) included in the monitoring apparatus 90.

The data processing unit 136 may associate the robot data obtained by the robot information acquisition unit 134 in the predetermined cycle with the coating data indicating the operation state of the coating device 42 in the predetermined cycle as the data in the predetermined cycle. Each time coating is performed on one coating path, the data processing unit 136 may associate the robot data for the coating path with the coating data indicating the operation state of the coating device 42 when coating is performed on the coating path as the data at the time of performing coating on the coating path.

### (Setting apparatus)

The setting apparatus 80 is a computer that performs various settings for control by the coating control apparatus 70 based on user input. Before the coating control apparatus 70 controls the control target apparatus to perform coating on the workpiece W, the user performs various settings for control using the setting apparatus 80. The control system 4 may include an input device 82 and a monitor 84 connected to the setting apparatus 80.

The input device 82 is a device for inputting information into the setting apparatus 80 (computer body). More specifically, the input device 82 inputs input information indicating a setting by the user to the setting apparatus 80. The input device 82 may be any device capable of inputting desired information, including, for example, a keyboard, an operation panel, and a mouse.

The monitor 84 is a device for displaying information output from the setting apparatus 80 (computer main body). When information from the setting apparatus 80 is displayed on the monitor 84, the user can confirm the information. The monitor 84 may be anything as long as information can be displayed on the screen, and a liquid crystal panel or the like can be given as a specific example. The setting apparatus 80, the input device 82, and the monitor 84 may constitute a single computer device.

The setting apparatus 80 includes, for example, an apparatus designation unit (an example of "apparatus designation circuitry") 142, a parameter setting unit 144, a correspondence information holding unit 146, an image generation unit 148, an execution program setting unit 152, a program holding unit 154, and a setting transmission unit (an example of "setting transmission circuitry") 156 as modules. The processing executed by these modules corresponds to the processing executed by the setting apparatus 80.

The apparatus designation unit 142 designates any one of the plurality of kinds of coating apparatuses 40 as the control target apparatus based on a user input indicating which of the plurality of kinds of coating apparatuses 40 is to be used. In one example, when there is a user input indicating that the coating apparatus 40A is to be used, the apparatus designation unit 142 designates the coating apparatus 40A as the controlled apparatus. Similarly, when there is user input indicating that the coating apparatus 40B (coating apparatus 40C) is to be used, the apparatus designation unit 142 designates the coating apparatus 40B (coating apparatus 40C) as the control target apparatus. The apparatus designation unit 142 may designates a control target apparatus based on a user input to an image (hereinafter referred to as "input image 300") displayed on the monitor 84.

The parameter setting unit 144 specifies a parameter that can be set by the user in accordance with the designation result by the apparatus designation unit 142. In the following description, a parameter specified to be user-settable is referred to as a "setting parameter". The parameter setting unit 144 may specify a plurality of setting parameters in accordance with an apparatus instructed by the control target apparatus. The setting parameter is a variable for determining various conditions and the like for controlling the control target apparatus, and a value (argument) can be set. The value of the setting parameter may be a physical quantity, an address, or an item number indicating a category or a group.

When the control target apparatus is different, setting parameters that can be set by the user are also different. That is, there exist setting parameters corresponding to the coating apparatus 40A, setting parameters corresponding to the coating apparatus 40B, and setting parameters corresponding to the coating apparatus 40C. The parameter setting unit 144 may specify a setting parameter corresponding to the designation result by the apparatus designation unit 142 by referring to correspondence information in which a plurality of types of coating apparatuses 40 are respectively associated with settable parameters in advance.

The parameter setting unit 144 sets the value of the setting parameter specified in accordance with the designation of the control target apparatus based on the user input indicating the setting value of the parameter. The parameter setting unit 144 may set the value of the setting parameter based on the user input to the input image 300 displayed on the monitor 84. The parameter setting unit 144 also functions as an item setting unit for setting the target data item. The parameter setting unit (item setting unit)(an example of "item setting circuitry") 144 specifies a plurality of kinds of data items that can be selected by the user in accordance with the designation result by the apparatus designation unit 142. The parameter setting unit 144 (item setting unit) sets a target data item for acquiring data from a plurality of types of data items on the basis of user input indicating a target for acquiring data.

The correspondence information holding unit 146 holds the correspondence information. The correspondence information held by the correspondence information holding unit 146 may be a table in which parameters settable in accordance with the coating apparatus 40A, parameters settable in accordance with the coating apparatus 40B, and parameters settable in accordance with the coating apparatus 40C are predetermined.

The image generation unit 148 generates (displays) an input image 300 for receiving user input on the monitor 84. The image generation unit 148 may generate an input image 300 for inputting a value of a setting parameter in accordance with the designation result by the apparatus designation unit 142. The image generation unit 148 generates an input image 300 having different display contents according to the designation result of the control target apparatus, for example. In one example, the image generation unit 148 generates an input image 300 into which values of setting parameters corresponding to the coating apparatus 40A can be input, and generates an input image 300 into which values of setting parameters corresponding to the coating apparatus 40B can be input. The image generation unit 148 also generates an input image 300 in which values of setting parameters corresponding to the coating apparatus 40C can be input.

The execution program setting unit 152 sets one or more control programs based on the designation result by the apparatus designation unit 142 and the setting result by the parameter setting unit 144. The execution program setting unit 152 acquires a basic program corresponding to a designated coating apparatus 40 from a plurality of basic programs set in advance for a plurality of kinds of coating apparatuses 40, for example. Then, the execution program setting unit 152 sets one or more control programs by modifying the basic program corresponding to the designated coating apparatus 40 based on the setting result by the parameter setting unit 144.

In one example, for each basic program, a constituent device 50 which is included in the control target apparatus and is to be controlled is defined. Further, in the basic program, a general frame (main content) of the control content for each constituent device 50 is defined. For example, in the basic program, various control contents are defined, such as from which constituent device 50 a sensor value is acquired, to which constituent device 50 a control command value is transmitted, and when a discharge command is received from the robot control apparatus 60, which constituent device 50 is controlled, and the like. The basic program may include parameters that can be set by the user (part of the setting parameters). In this case, since the apparatus to be controlled is different for each basic program, parameters that can be set on the basic program are also different.

The execution program setting unit 152 may generate one or more control programs by reflecting the setting result (a part of the setting result) from the parameter setting unit 144 to the basic program corresponding to the control target apparatus. Alternatively, the execution program setting unit 152 may generate one or more control programs by selecting or generating a subroutine included in the basic program according to the setting result by the parameter setting unit 144.

The program holding unit 154 holds a plurality of basic programs associated with the plurality of kinds of coating apparatuses 40. The program holding unit 154 holds, for example, a basic program associated with the coating apparatus 40A, a basic program associated with the coating apparatus 40B, and a basic program associated with the coating apparatus 40C. These basic programs may be created in advance before the setting stage by the setting apparatus 80. Alternatively, the program holding unit 154 may hold the basic program created in the setting stage by the setting apparatus 80 (immediately before the setting operation of various parameters). In this case, the program holding unit 154 may hold a basic program corresponding to one type of coating apparatus 40 (control target apparatus) and may not hold a basic program corresponding to another type of coating apparatus 40.

The setting transmission unit 156 transmits the designation result by the apparatus designation unit 142 and the setting result by the parameter setting unit 144 to the coating control apparatus 70. The setting transmission unit 156 transmits, for example, designation information indicating the control target apparatus designated by the apparatus designation unit 142 and setting information indicating the setting of the setting parameter set by the parameter setting unit 144 to the setting reception unit 128 of the coating control apparatus 70. The setting transmission unit 156 may transmit one or more control programs set by the execution program setting unit 152 to the setting reception unit 128. The setting transmission unit 156 may transmit the information to the setting reception unit 128 based on a transmission instruction from the user.

The setting transmission unit 156 transmits the designation information and the setting information to the setting reception unit 128, thereby completing the setting of the coating control apparatus 70. The operation control unit 122 of the coating control apparatus 70 controls the control target apparatus indicated by the designation information based on at least the setting result by the parameter setting unit 144. The operation control unit 122 may control the control target apparatus in accordance with one or more control programs set by the execution program setting unit 152. Since the setting result by the parameter setting unit 144 is reflected in one or more control programs, controlling the control target apparatus according to one or more control programs corresponds to controlling the control target apparatus based on the setting result.

The monitoring apparatus 90 is a computer that records the result of the coating operation by the coating apparatus by acquiring information from the coating control apparatus 70, and monitors the state (quality) of coating by the coating device 42 of the coating apparatus. The monitoring apparatus 90 includes, for example, a storage unit 162, a state determination unit (an example of "state determination circuitry") 164, a position estimation unit (an example of "position estimation circuitry") 166, a notification unit (an example of "notification circuitry") 168, a data accumulation unit (an example of "data accumulation circuitry") 172, an input information acquisition unit 174, an algorithm construction unit (an example of "algorithm construction circuitry") 176, and an algorithm holding unit 178 as modules. The processes executed by these modules corresponds to the processing executed by the monitoring apparatus 90.

The storage unit 162 stores data (hereinafter referred to as "corresponding data") in which the coating data indicating the operation state of the coating device 42 and the robot data indicating the operation state of the robot 10 are associated with each other. The storage unit 162 stores corresponding data transmitted from the data processing unit 136. In the corresponding data stored in the storage unit 162, the coating data and the robot data are associated with each other at predetermined intervals or for each coating path.

The state determination unit 164 determines whether or not the state of coating by the coating device 42 is normal based on at least one of the coating data and the robot data stored in the storage unit 162. The state determination unit 164 determines whether or not the state of the coating material supplied from the coating device42 on the workpiece W is normal based on, for example, the coating data and the robot data. The state determination unit 164 may determine whether or not the coating state in the cycle is normal based on the coating data and the robot data for each cycle in the corresponding data. The state determination unit 164 may determine whether or not the state of coating in the coating path is normal based on the coating data for each coating path and the robot data in the corresponding data.

In one example, the state determination unit 164 may determine whether or not the state of coating by the coating device 42 is normal by using the determination algorithm which outputs a determination result indicating whether or not the state of coating by the coating device 42 is normal, in response to an input of data indicating at least one of the coating data and the robot data (hereinafter referred to as "operation data"). The determination algorithm may be constructed so as to output a determination result corresponding to the comparison result between each data included in the operation data and the threshold value. The determination algorithm may be a determination model constructed by machine learning so as to output various data included in the operation data as input data and the determination result corresponding to the input data as output data. The operation data may be data including both the coating data and the robot data.

When the state determination unit 164 determines that the state of coating by the coating device 42 is not normal, the position estimation unit 166 calculates a position on the workpiece W at which the state of coating by the coating device 42 is estimated to be not normal based on the robot data stored in the storage unit 162. In the present disclosure, determining that the state of coating on the workpiece W is not normal corresponds to determining that the state of coating (quality of painting) is abnormal.

The position estimation unit 166 calculates, based on the robot data, the position of the coating material adhesion area from the coating device 42 to the workpiece W when it is determined that there is an abnormality. Since the position of the coating material adhesion area on the workpiece W at that time is determined in accordance with the position and posture of the coating device 42 with respect to the workpiece W, the position estimation unit 166 can calculate the position of the adhesion area from the robot data (the operation command or the operation result of the actuators 31 to 36).

The notification unit 168 notifies the determination result by the state determination unit 164 and the estimation result by the position estimation unit 166. When the state determination unit 164 determines that the state of coating is abnormal, the notification unit 168 notifies information indicating that the state of coating is abnormal and information indicating the position estimated (calculated) by the position estimation unit 166. A monitor (not illustrated) may be connected to the monitoring apparatus 90, and the notification unit 168 may display information indicating that the state of coating is abnormal and information indicating the position estimated by the position estimation unit 166 on the monitor.

The data accumulation unit 172 stores performance information in which operation data indicating at least one of the coating data and the robot data is associated with a coating state (evaluation result) by the coating device 42 based on the operation data. The data accumulation unit 172 accumulates performance information in the stage (phase) of constructing the determination algorithm. The state of coating by the coating device 42 based on the operation data is an evaluation result of the state of coating on the workpiece W, and is evaluated by the user. For example, the state of coating by the coating device 42 based on the operation data is evaluated (classified) as either normal or abnormal by the user. The data accumulation unit 172 may accumulate the above-mentioned performance information from the coating data obtained by performing coating on a plurality of workpieces W, the robot data, and the evaluation result by the user.

The input information acquisition unit 174 acquires an evaluation result by the user regarding the actual state of coating by the coating device 42. The monitoring apparatus 90 may be connected to an input device (not illustrated), and the input information acquisition unit 174 acquires an evaluation result on the actual state of coating on the workpiece W based on input information from the input device.

The algorithm construction unit 176 constructs the determination algorithm based on the performance information accumulated by the data accumulation unit 172. The algorithm construction unit 176 may construct a determination model for outputting a determination result indicating whether or not the state of coating is normal in response to an input of the operation data by performing machine learning using the performance information as the learning data. The algorithm construction unit 176 may construct a determination algorithm (determination model) corresponding to each of the control target apparatuses. The algorithm holding unit 178 holds the determination algorithm constructed by the algorithm construction unit 176.

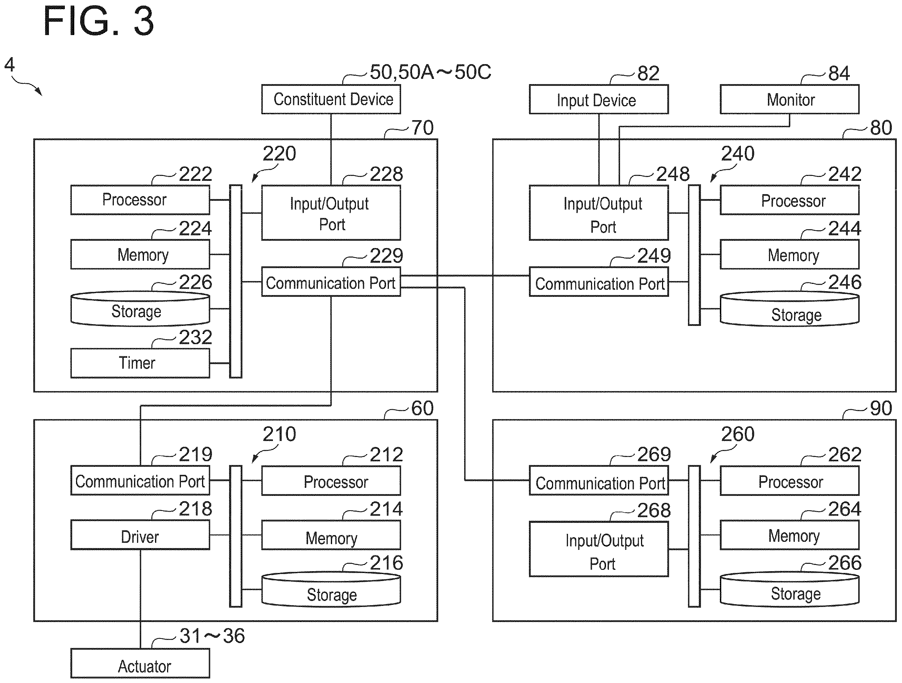

FIG. 3 shows an example of hardware configurations of the robot control apparatus 60, the coating control apparatus 70, the setting apparatus 80, and the monitoring apparatus 90. The robot control apparatus 60 includes circuitry 210. The circuitry 210 includes at least one processor 212, memory 214, storage 216, driver 218, and communication port 219. The storage 216 is a nonvolatile storage medium (for example, a flash memory) readable by a computer.

The memory 214 temporarily stores a program loaded from the storage 216, results of operations by the processor 212, and the like. The processor 212 executes the program in cooperation with the memory 214, thereby constituting each module of the robot control apparatus 60. The driver 218 outputs drive power to the actuators 31 to 36 in response to a command from the processor 212. The communication port 219 communicates with the coating control apparatus 70 via a radio, a wire, or a network line in response to a command from the processor 212.

The coating control apparatus 70 includes circuitry 220. The circuitry 220 includes at least one processor 222, memory 224, storage 226, input/output port 228, communication port 229, and timer 232. The storage 226 is a nonvolatile storage medium (for example, a flash memory) readable by a computer. The storage 226 stores a program for causing a computer to execute controlling the coating device 42 so as to move in accordance with an operation of the robot 10 in response to a command from the robot control apparatus 60), acquiring from the robot control apparatus 60 robot data indicating the operation state of the robot 10 moved in accordance with an operation of with the coating device 42, and associating the coating data indicating the operation state of the coating device 42 and the acquired robot data and storing in the storage unit.

The memory 224 temporarily stores a program loaded from the storage 226, results of operations by the processor 222, and the like. The processor 222 executes the program in cooperation with the memory 224 and the input/output port 228, thereby constituting each module of the coating control apparatus 70. The input/output port 228 inputs/outputs an electric signal to/from a plurality of constituent devices 50 of the coating apparatus 40 according to a command from the processor 222. The input/output port 228 may include a plurality of registers (input/output registers) for inputting/outputting electrical signals to/from the constituent device 50. The plurality of input/output registers may temporarily hold data to be transmitted/received to/from the respective constituent devices 50, and may constitute the plurality of transmission data storage units 124 and the plurality of reception data storage units 126 described above.

The communication port 229 communicates with each of the robot control apparatus 60, the setting apparatus 80, and the monitoring apparatus 90 via a radio, a wire, or a network line in response to a command from the processor 222. The timer 232 counts clock pulses of a predetermined cycle according to a command from the processor 222 and measures an elapsed time.

The setting apparatus 80 includes circuitry 240. The circuitry 240 includes one or more processors 242, memory 244, storage 246, input/output ports 248, and communication ports 249. The storage 246 is a nonvolatile storage medium (for example, a flash memory) readable by a computer. The storage 246 stores a program for causing a computer to execute designating any one of a plurality of kinds of coating devices 40 as a control target apparatus on the basis of a user input indicating which of the plurality of kinds of coating devices (40) is to be used, specifying a setting parameter that can be set by the user in accordance with the designation result of the control target apparatus and setting a value of the setting parameter on the basis of the user input indicating the set value of the parameter, and transmitting the designation result of the control target apparatus and the setting result of the setting parameter to the coating control apparatus 70.

The memory 244 temporarily stores a program loaded from the storage 246, results of operations by the processor 242, and the like. The processor 242 forms each module of the setting apparatus 80 by executing the above program in cooperation with the memory 244. The input/output port 248 inputs/outputs electrical signals to/from the input device 82, the monitor 84 and the like in response to a command from the processor 242. The communication port 249 communicates with the coating control apparatus 70 via a radio, a wire, or a network line in response to a command from the processor 242.

The monitoring apparatus 90 includes circuitry 260. The circuitry 260 includes at least one processor 262, memory 264, storage 266, input/output ports 268, and communication ports 269. The storage 266 is a nonvolatile storage medium (for example, a flash memory) readable by a computer.

The memory 264 temporarily stores a program loaded from the storage 266, results of operations by the processor 262, and the like. The processor 262 executes the program in cooperation with the memory 264, thereby constituting a module of the monitoring apparatus 90. The input/output port 268 inputs/outputs electric signals to/from an input device for the monitoring apparatus 90, a monitor, and the like in response to a command from the processor 262. The communication port 269 communicates with the coating control apparatus 70 via a radio, a wire, or a network line in response to a command from the processor 262.

At least one noted that at least one of the circuitry 210, 220, 240, and 260 is not necessarily limited to constituting each function by a program. For example, at least a part of the functions of the at least one circuitry may be configured by a dedicated logic circuit or an ASIC (Application Specific Integrated Circuit) on which the logic circuit is integrated.

### [Method for Setting Coating control apparatus]

Next, a series of processes executed by the setting apparatus 80 will be described as an example of a setting method of the coating control apparatus 70. This series of processing includes at least designating any one of a plurality of types of coating apparatuses 40 as a control target apparatus on the basis of a user input indicating which one of the plurality of types of coating apparatuses 40 is to be used, identifying a setting parameter that can be set by the user according to the designation result of the control target apparatus and setting a value of the setting parameter on the basis of the user input indicating the set value of the parameter, and transmitting the designation result of the control target apparatus and the setting result of the setting parameter to the coating control apparatus 70.

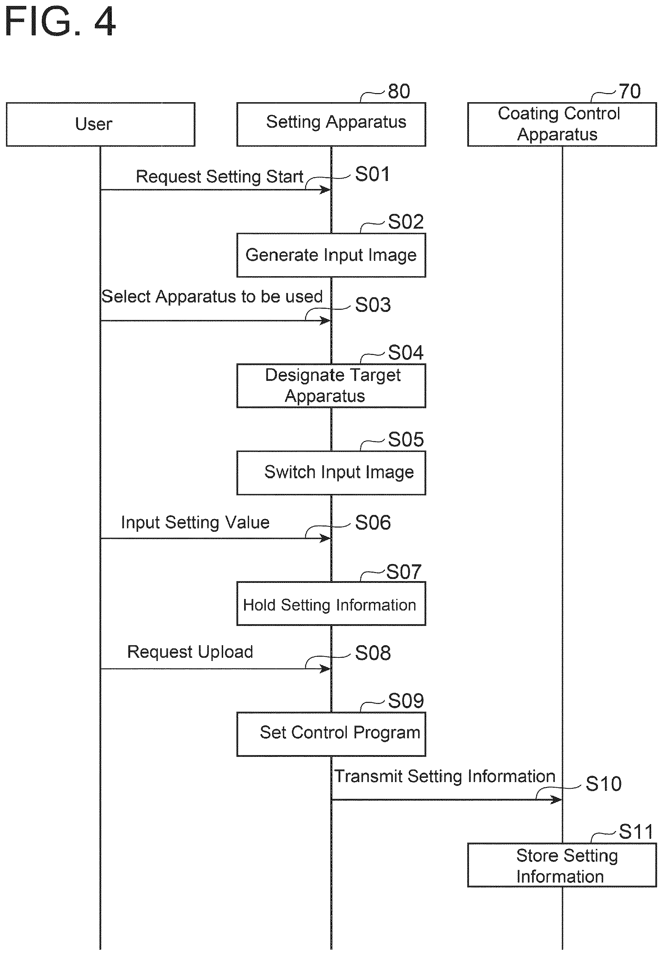

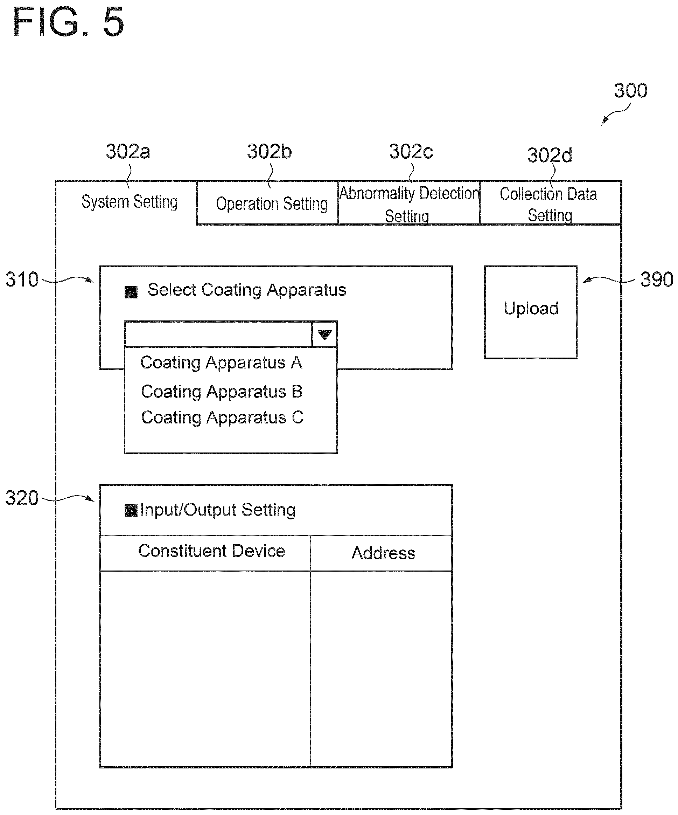

FIG. 4 is a sequence diagram showing a series of processes executed by the setting apparatus 80. In this series of processing, when a setting start request from the user is received (step S01), the setting apparatus 80 executes step S02. In step S02, for example, the image generation unit 148 generates (displays) an input image 300 for receiving user input on the monitor 84. FIG. 5 shows an example of the input image 300 displayed on the monitor 84.

The input image 300 includes a plurality of tabs for switching between various setting screens. FIG. 5 shows an input image 300 in a state where a system setting tab 302a, which is one of the tabs, is selected (or in an initial state). In the input image 300 in a state where the tab 302a is selected, a selection image 310 for selecting the type of the coating apparatus 40 to be used is displayed.

Next, when the selection result by the user of the device to be used is accepted (step S03), the setting apparatus 80 executes step S04. In step S04, for example, the apparatus designation unit 142 designates, as the target control apparatus, an apparatus (type) selected by a user's operation from a plurality of types of coating apparatuses 40 shown in pull-down form in the selection image 310.

Next, the setting apparatus 80 executes step 05. In step S05, for example, the parameter setting unit 144 specifies a setting parameter that can be set by the user in accordance with the type of the control target apparatus specified in step S04. In one example, the parameter setting unit 144 refers to the correspondence information (correspondence table) held by the correspondence information holding unit 146 to specify a setting parameter corresponding to the type of the control target apparatus specified in step S04. Then, the image generation unit 148 switches the display contents of the input image 300 so that the specified setting parameter can be set according to the result of specifying the setting parameter.

The setting parameter includes various parameters. The setting parameter includes, for example, a communication parameter. The communication parameter is a parameter for setting a connection state with the control target apparatus, and includes a transmission parameter and a reception parameter. The transmission parameter is a parameter for specifying a storage unit for writing a control command value to the constituent device 50 of the control target apparatus among the plurality of transmission data storage units 124. The reception parameter is a parameter for specifying a storage unit for reading a sensor value from the constituent device 50 of the control target apparatus among the plurality of reception data storage units 126.

In one example, the input image 300 in a state where the tab 302a is selected includes an input/output setting image for setting communication parameters. The input/output setting image includes a list of constituent devices 50 included in the designated control target apparatus and a field for inputting addresses (setting values of communication parameters). The image generation unit 148 switches the display contents of the input/output setting image according to the type of the coating apparatus 40 selected in the selection image 310. The display contents of the input/output setting image when the coating apparatus 40A is selected (designated) are different from the display contents of the input/output setting image when the coating apparatus 40B (coating apparatus 40C) is selected.

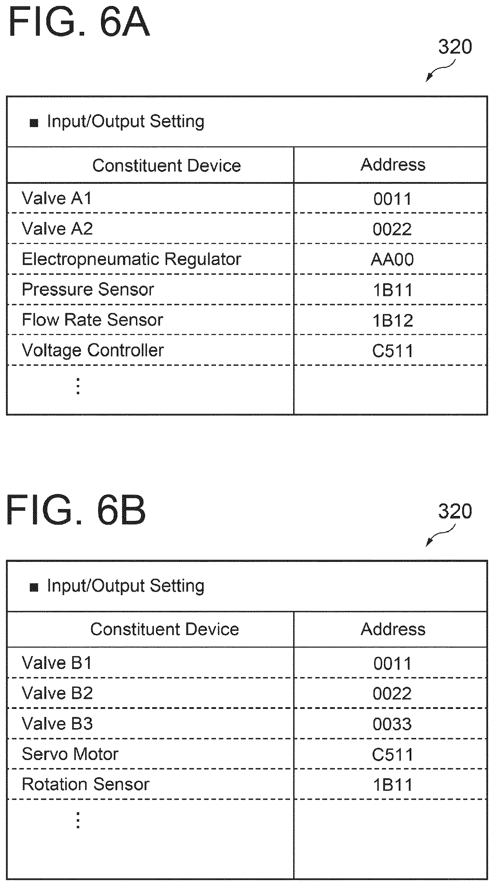

FIG. 6A shows an example of the input/output setting image 320 when the coating apparatus 40A is selected, and FIG. 6B shows an example of the input/output setting image 320 when the coating apparatus 40B is selected. The coating apparatus 40A and the coating apparatus 40B have a different plurality of the constituent devices 50, the apparatuses displayed on the list of the constituent devices 50 are different from each other. In this case, by operating the setting apparatus 80, the user can set the input/output for a plurality of constituent devices 50A of the coating apparatus 40A when the coating apparatus A is used, and can set the input/output for a plurality of constituent devices 50B of the coating apparatus 40B when the coating apparatus B is used.

Next, when an input of a set value from the user is received (step S06), the setting apparatus 80 executes step S07. In step S07, the parameter setting unit 144 sets the setting parameter based on the user input indicating the setting value of the parameter, and the setting information is held. The parameter setting unit 144 may set the communication parameter based on input information of an address of each constituent device 50 displayed in the input/output setting image.

In one example, the user knows the connection state and communication specifications between the coating apparatus 40 and the coating control apparatus 70 to be used before setting. That is, before setting, the user knows through which input/output register each constituent device 50 of the coating apparatus 40 to be used can communicate with the coating control apparatus 70. As shown in FIGS. 6A and 6B, in the input/output setting image, the user inputs an address of an input/output register corresponding to each constituent device 50 as a set value of a communication parameter. As a result, input/output registers are allocated to each constituent device 50.

In the case where the coating apparatus 40A is selected and the case where the coating apparatus 40B is selected, the same address of the input/output register is set for different constituent devices. That is, at least some of the input/output registers can be used in common, even if the types of the coating apparatuses 40 used are different, and a plurality of types of coating apparatuses 40 can be controlled. Instead of setting the address corresponding to each constituent device 50, the user may set the communication specification, the head address, and the data size of each constituent device 50 as the communication parameters for each constituent device 50.

The setting parameters set in steps S06 and S07 are not limited to the communication parameters described above. The setting parameter includes, for example, an operation parameter. The operation parameter is a parameter for defining the operation of the constituent device 50 included in the control target apparatus. The operation parameter defines an operation in which the setting value can be changed in the basic program described above, for example. The operation parameter may include a discharge condition of coating material discharged from the coating device 42 of the control target apparatus. The operation parameter may include discharge conditions for each color of coating material that can be discharged by the coating device 42 of the control target apparatus. The discharge condition is, for example, the discharge amount of the coating material.

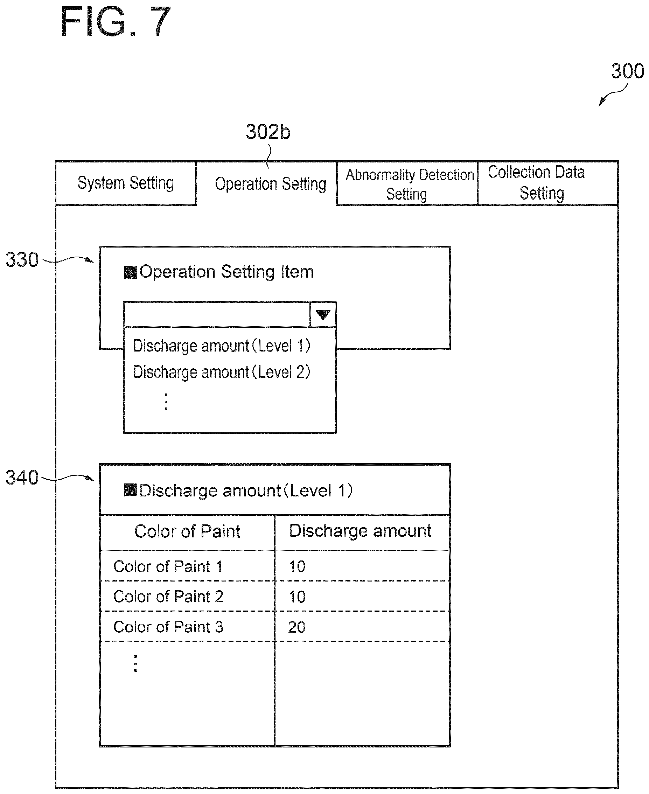

FIG. 7 shows an example of the input image 300 in a state where the tab 302b for setting the operation parameter is selected. The input image 300 in a state in which the tab 302b is selected includes an item selection image 330 for selecting an operation parameter to be set and an operation setting image 340 for inputting a value of the operation parameter. In the item selection image 330, a plurality of kinds of operation parameters corresponding to the control target apparatus can be selected. That is, the operation parameters that can be selected in the item selection image 330 when the coating apparatus 40A is designated are different from the operation parameters that can be selected in the item selection image 330 when the coating apparatus 40B (coating apparatus 40C) is designated.

In the example shown in FIG. 7, the operation setting image 340 is replaced by an operation parameter (item) designated in the item selection image 330. When the user selects "discharge amount (level 1)" in the item selection image 330, the user can set the discharge amount for level 1 as an operation parameter in the operation setting image 340. The user can set the discharge amount for each color of coating material as an operation parameter. The level 1 indicates the level of the discharge amount and corresponds to the discharge level included in the discharge command from the robot control apparatus 60. For example, when a discharge command indicating that the discharge level is level 1 is received from the robot control apparatus 60, the control target apparatus is controlled so that the coating material is discharged at the discharge amount set for the level 1.

The setting parameter includes an abnormality detection parameter. The abnormality detection parameter is a parameter for determining a level at which an abnormality of the control target apparatus is detected. In one example, the user sets, as the value of the abnormality detection parameter, a threshold value for detecting that the detected value of pressure by the pressure sensor, which is one of the constituent devices 50, has decreased. The user sets a threshold value for detecting that the rotational speed of the motor, which is one of the constituent devices 50, has reached the upper limit or the lower limit, as the value of the abnormality detection parameter.

Although not illustrated, in the input image 300 in which the tab 302c for setting abnormality detection is selected, a setting image in which the abnormality detection parameter can be set is displayed. In this setting image, a plurality of kinds of abnormality detection parameters (items) corresponding to the control target apparatus can be set. That is, the abnormality detection parameter that can be set in the setting image when the coating apparatus 40A is designated is different from the abnormality detection parameter that can be set in the setting image when the coating apparatus 40B (coating apparatus 40C) is designated.

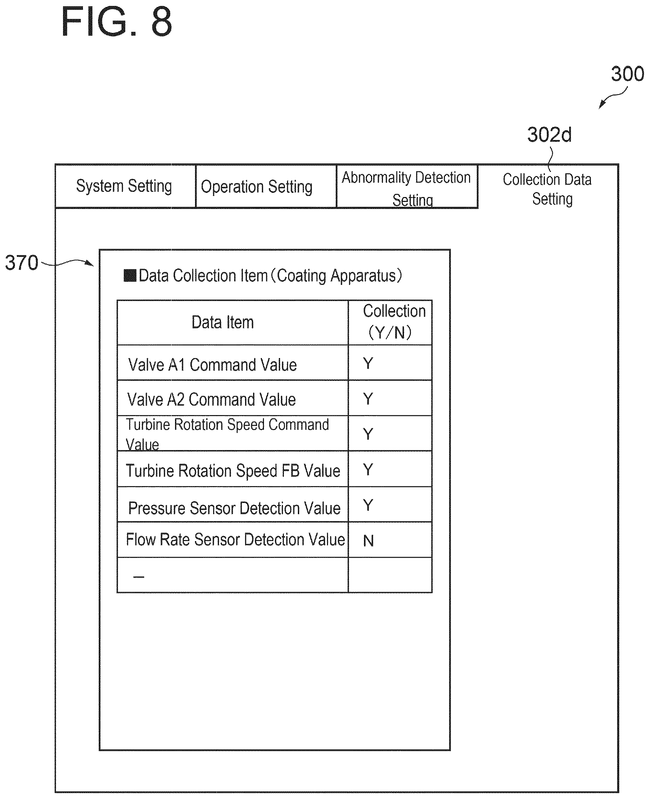

In steps S06 and S07, the target data item to be collected as the coating data is set in addition to the setting parameters. FIG. 8 shows an example of the input image 300 in a state where the tab 302d for setting the target data item is selected. In the input image 300 in a state where the tab 302d is selected, a collection setting image 370 for setting the target data item is displayed.

In the collection setting image 370, a plurality of types of data items (a list of data items) corresponding to the control target apparatus are displayed, and it is possible to set which of the plurality of types of data items is the target data item. That is, a list of selectable data items corresponding to the control target apparatus is displayed. The plurality of kinds of data items displayed in the collection setting image 370 when the coating apparatus 40A is designated are different from the plurality of kinds of data items displayed in the collection setting image 370 when the coating apparatus 40B (coating apparatus 40C) is designated.

The user sets whether or not each of the plurality of types of data items displayed in the collection setting image 370 is to be subjected to data collection. In the example shown in FIG. 8, in the "collection (Y/N)" column, the data item in which "Y" is input is set to the target data item, and the data item in which "N" is input is set to the data item in which data collection is not continued. The parameter setting unit 144 (item setting unit) sets a target data item for continuously acquiring data and transmitting the data to the monitoring apparatus 90 based on an input from the user to the collection setting image 370.

Returning to FIG. 4, when receiving an upload request from the user (step S08), the setting apparatus 80 executes step S09. As shown in FIG. 5, the input image 300 in which the tab 302a is selected includes a button 390 for receiving an upload request. For example, when the user selects (clicks) the button 390, the setting apparatus 80 receives an upload request.

In step S09, for example, the execution program setting unit 152 sets one or more control programs based on the designation result of the control target apparatus in steps S03 and S04 and the setting result of the setting parameter in steps S06 and S07. In one example, the execution program setting unit 152 acquires a basic program corresponding to the designation result of the control target apparatus from a plurality of basic programs set in advance for a plurality of kinds of coating apparatuses 40. Then, the execution program setting unit 152 sets one or more control programs by modifying the acquired basic program (for example, by setting arguments in the basic program) in accordance with the setting result of the operation parameter and the abnormality detection parameter.

Next, the setting apparatus 80 executes step S10. In step S10, for example, the setting transmission unit 156 transmits various kinds of setting information to the coating control apparatus 70. In one example, the setting transmission unit 156 transmits the designation result of the control target apparatus in steps S02 and S03, the setting result of the setting parameter in steps S06 and S07, and one or more control programs set in step S09 to the setting reception unit 128 of the coating control apparatus 70.

Upon receiving the transmission of the various setting information, the coating control apparatus 70 executes step S11. In step S11, for example, the setting holding unit 132 of the coating control apparatus 70 holds various kinds of setting information received in step S10. As a result of the series of processes described above, the coating control apparatus 70 is brought into a state in which it is possible to control the control target apparatus in accordance with the setting information set by the setting apparatus 80.

### [Control Method by Coating Control Apparatus]

Next, a series of processes executed by the coating control apparatus 70 after setting by the setting apparatus 80 will be described as an example of the control method for the control target apparatus by the coating control apparatus 70. This series of processing includes at least controlling the coating device 42 of the control target apparatus so as to move in accordance with an operation of the robot 10 in response to a discharge command from the robot control apparatus 60, acquiring robot data indicating the operation state of the robot 10 from the robot control apparatus 60, and associating the coating data indicating the operation state of the coating device 42 with the acquired robot data and storing the data in a storage unit.

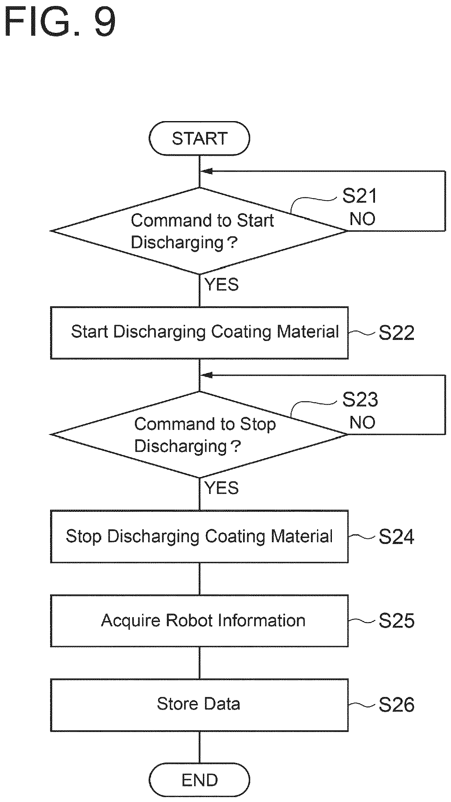

FIG. 9 is a flowchart showing a series of processes executed by the coating control apparatus 70 when coating is performed on one coating path. In this series of processing, the coating control apparatus 70 first executes step S21. In step S21, for example, the operation control unit 122 of the coating control apparatus 70 waits until receiving a discharge start command from the command transmission unit 114 of the robot control apparatus 60. The command transmission unit 114 of the robot control apparatus 60 may transmit a discharge start command to the coating control apparatus 70 after the coating device 42 is disposed at a position corresponding to the start position of the path to be coated. The discharge start command transmitted from the robot control apparatus 60 may include information indicating the color of the coating material to be discharged and information indicating the level of the discharge amount of the coating material.

Next, the coating control apparatus 70 executes step S22. In step S22, for example, the operation control unit 122 controls some constituent devices 50 of the control target apparatus so that the discharge of coating material from the coating device 42 of the control target apparatus is started. After the start of step S22, the operation control unit 122 controls some constituent devices 50 of the control target apparatus in accordance with the discharging command acquired in step S21, one or more control programs set therein, and set values of set parameters.

When operating the constituent device 50 of the control target apparatus, the operation control unit 122 executes writing of a control command value into a storage unit (for example, an input/output register associated with the constituent device 50 specified by a value set by a transmission parameter among the plurality of transmission data storage units 124. When acquiring the sensor value from the constituent device 50 of the control target apparatus, the operation control unit 112 executes reading the sensor value from a storage unit (for example, an input/output register associated with the constituent device 50) specified by (for example, an input/output register associated with the constituent device 50).

When controlling the control target apparatus, the operation control unit 122 executes to operate the constituent device 50 of the control target apparatus in accordance with the value set in the operation parameter. The operation control unit 122 operates the constituent device 50 of the control target apparatus so that the coating material is discharged from the coating device 42 according to the discharge condition set as an operation parameter, for example.

After the start of step S22, the operation control unit 122 may continue monitoring the operation state of the controlled apparatus. For example, when controlling the control target apparatus, the operation control unit 122 detects an abnormality of the control target apparatus in accordance with a value set in the abnormality detection parameter. In one example, the operation control unit 122 detects that the operation state of the control target apparatus is abnormal when the sensor value for determining abnormality detection exceeds or falls below the threshold value set as the abnormality detection parameter.

After the start of step S22, the robot control apparatus 60 causes the actuators 31 to 36 to change the position and orientation of the coating device 42 of the control target apparatus so that coating material is supplied along the target coating path. At this time, since the operation control unit 122 continues to discharge coating material from the coating device 42 of the control target apparatus, the robot 10 is moved in accordance with an operation of the coating device 42 to supply coating material to the target coating path.

Next, the coating control apparatus 70 executes steps S23 and S24. In step S23, for example, the operation control unit 122 of the coating control apparatus 70 stands by until receiving a discharge stop command from the command transmission unit 114 of the robot control apparatus 60. The command transmission unit 114 of the robot control apparatus 60 transmits a discharge stop command to the coating control apparatus 70 when the coating device 42 is arranged at a position corresponding to the end position of the target coating path . In step S24, for example, the operation control unit 122 controls some constituent devices 50 of the control target apparatus so that the discharge of coating material from the coating device 42 of the control target apparatus is stopped.

In step S25, for example, the robot information acquisition unit 134 acquires from the robot control apparatus 60 robot data indicating the operation state of the robot 10 in the target coating path. The robot data may include data indicating an operation command of a device (for example, actuators 31 to 36) included in the robot 10 when the robot 10 is moved in accordance with an operation of the coating device 42. The robot data may include data indicating operation results of devices (for example, actuators 31 to 36) included in the robot 10 when the robot 10 is moved in accordance with an operation of the coating device 42.

The operation command includes, for example, a target angle of the actuators 31 to 36 corresponding to the target position and the target attitude of the coating device 42 and a target speed of the coating device 42. The operation result includes detected values of angles of the actuators 31 to 36 corresponding to positions and postures of the coating device 42, and a moving speed of the coating device42. The robot information acquisition unit 134 may acquire workpiece information indicating the type of the workpiece W to be coated from the robot control apparatus 60. The robot information acquisition unit 134 may acquire at least one of information indicating an individual (ID) of the workpiece W and information specifying the coating path from the robot control apparatus 60 in addition to or in place of the workpiece information.

Next, the coating control apparatus 70 executes step S26. In step S26, for example, the data processing unit 136 causes the storage unit 162 of the monitoring apparatus 90 to store the coating data indicating the operation state of the coating device 42 when the coating material is discharged in steps S21 to S23 in association with the robot data acquired in step S25. In addition to the robot data, the data processing unit 136 may further associate at least one of the workpiece information, the individual information of the workpiece W, and the specific information of the coating path with the coating data and store them in the storage unit 162.

The data processing unit 136 may associate the coating data including data corresponding to the target data item set by the setting apparatus 80 (data acquired for the target data item) with the robot data and send the robot data to the storage unit 162. Thus, a series of processes in one coating path is completed. The coating control apparatus 70 may execute a series of processes of steps S21 to S26 in the same manner when supplying the coating material to the other coating paths of the same workpiece W and when supplying the coating material to each coating path of the other workpiece W.

### [Monitoring Method by Monitoring apparatus]

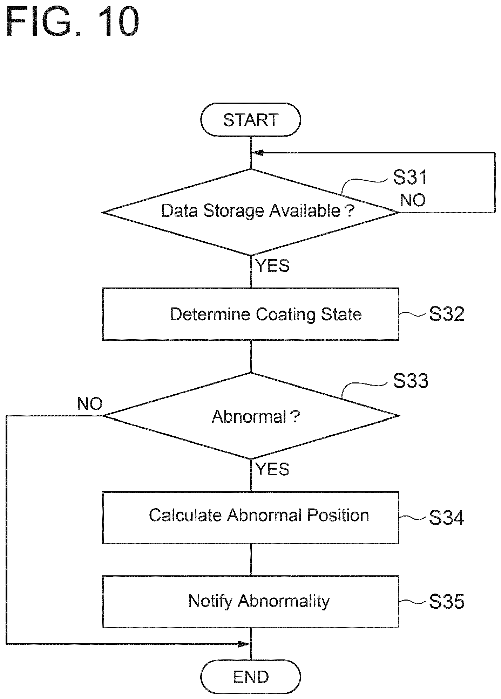

Next, as an example of a method for monitoring the execution result of the control target apparatus by the monitoring apparatus 90, a series of processes executed by the monitoring apparatus 90 after the supply of the coating material will be described. FIG. 10 is a flow chart showing a series of processes executed by the monitoring apparatus 90 after coating is performed on one coating path.

In this series of processing, the monitoring apparatus 90 first executes step S31. In step S31, for example, the state determination unit 164 waits until the corresponding data (data in which the coating data and the robot data are associated) for one coating path is stored in the storage unit 162.

Next, the monitoring apparatus 90 executes step S32. In step S32, for example, the state determination unit 164 determines whether or not the coating state is normal based on the coating data and the robot data stored in the storage unit 162 immediately before step S31. In one example, the state determination unit 164 determines whether or not the state of coating is normal by inputting the coating data and the robot data to the determination algorithm held in the algorithm holding unit 178 and obtaining the output result from the determination algorithm.

Next, the monitoring apparatus 90 executes step S33. In step S33, for example, the position estimation unit 166 (or the notification unit 168) determines whether or not the determination result in step S32 is abnormal. If it is determined in step S33 that the determination result is abnormal (step S33 : YES), the monitoring apparatus 90 executes steps S34 and S35.

In step S34, for example, based on the robot data stored in the storage unit 162 immediately before step S32, the position estimation unit 166 calculates a position (position in the workpiece W) at which the state of coating by the coating device 42 of the control target apparatus is estimated to be abnormal. In one example, the position estimation unit 166 calculates the position of the coating path in which the coating state is estimated to be abnormal based on information indicating the coating path associated with the robot data. Alternatively, the position estimation unit 166 estimates an abnormal position of the state of the coating material on the coating path based on the robot data. The position estimation unit 166 may use the workpiece information indicating the type of the workpiece W when calculating the position estimated to be abnormal.

In step S35, for example, the notification unit 168 notifies information indicating that the state of coating on the workpiece W is abnormal and information indicating the estimated position calculated in step S34. The notification unit 168 may display this information on a monitor connected to the monitoring apparatus 90. As a result, the user (worker) can know that there is a possibility that an abnormality has occurred in the coating operation on the workpiece W and the position where the abnormality has occurred. After the abnormality is detected by the monitoring apparatus 90, repair of the coating by a worker or re-execution or repair of the coating by the robot 10 and the coating apparatus may be performed.

On the other hand, if it is determined in step S33 that the coating state is normal (step S33 : NO), the monitoring apparatus 90 does not execute steps S34 and S35. Thus, a series of processes in one coating path is completed. The monitoring apparatus 90 may similarly execute a series of processes of steps S31 to S35 when the coating material is supplied to the other coating paths of the same workpiece W and when the coating material is supplied to the respective coating paths of the other workpiece W. The monitoring apparatus 90 may execute a series of processes of steps S31 to S35 for each coating path after all coating operations for one workpiece W have been completed, or may execute a series of processes of steps S31 to S35 at predetermined intervals.

The above-described series of processing shown in FIGS. 4, 9, and 10 is merely an example, and can be appropriately modified. In the series of processes described above, each of the coating control apparatus 70, the setting apparatus 80, and the monitoring apparatus 90 may execute one step and the next step in parallel, or may execute each step in a different order from that in the example described above. Each of the coating control apparatus 70, the setting apparatus 80, and the monitoring apparatus 90 may omit any of the steps, and may perform processing different from that in the example described above in any of the steps.

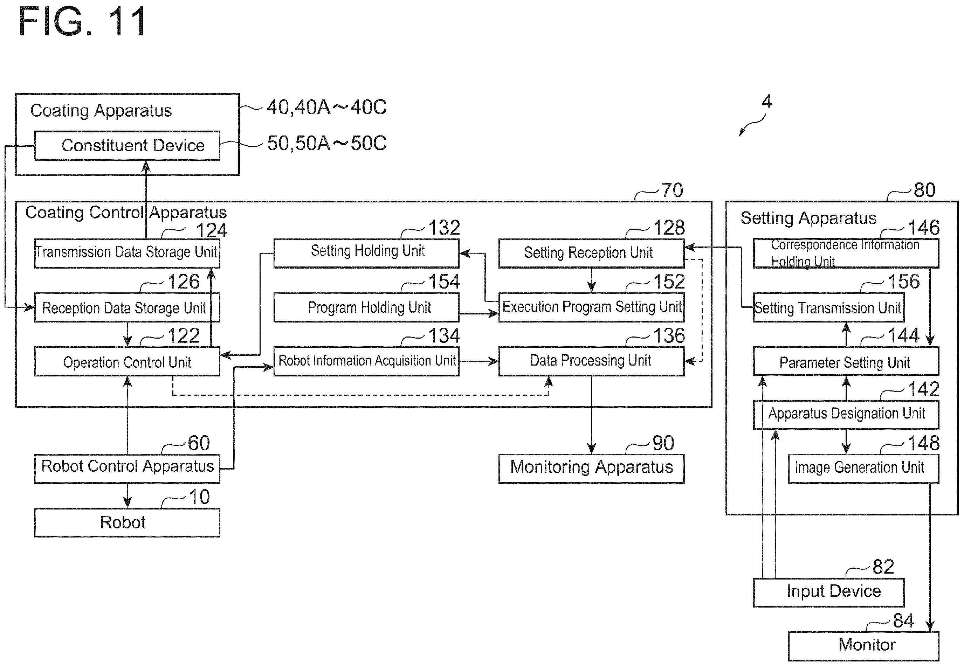

The above configuration of the control system 4 is an example, and the coating control apparatus 70 may include at least a part of the module included in the setting apparatus 80. For example, as shown in FIG. 11, the setting apparatus 80 may not have the execution program setting unit 152 and the program holding unit 154, but the coating control apparatus 70 may have the execution program setting unit 152 and the program holding unit 154.

In the example shown in FIG. 11, when the setting reception unit 128 of the coating control apparatus 70 receives the designation information of the control target apparatus and the setting information of the setting parameters from the setting transmission unit 156, the execution program setting unit 152 sets one or more control programs based on the designation information and the setting information. For example, in the series of processing shown in FIG. 4, step S10 including transmission of the setting information is executed after the upload request in step S08. Thereafter, the execution program setting unit 152 of the coating control apparatus 70 executes step S09 including setting of the control program. Before the upload request in step S08, the setting apparatus 80 may request information necessary for setting to the coating control apparatus 70 in accordance with the designation of the control target apparatus in step S04, thereby acquiring information indicating user-settable items such as setting parameters.

The input image 300 shown in FIGS. 5 to 8 is an example, and can be appropriately changed according to the contents to be set. Constituent devices 50 that are not set in the basic program (for example, components constituting peripheral devices 46) may be connected, and in this case, a program that specifies control for the constituent devices 50 in the setting apparatus 80 may be created. The setting apparatus 80 may be capable of setting the control content of the robot 10 by the robot control apparatus 60. In the above example, a plurality of kinds of coating apparatuses 40 having different coating methods are shown, but the plurality of kinds of coating apparatuses 40 may include at least two kinds of coating apparatuses 40 having the same coating method and different product numbers (types).

### [Effect of Embodiment]

The coating control apparatus 70 according to the above embodiment comprises an operation control unit 122 for controlling the coating device 42 so as to be moved in accordance with an operation of the robot 10 in response to a command from the robot control unit 60 for controlling the robot 10 for changing the position and orientation of the coating device42, a robot information acquisition unit 134 for acquiring from the robot control unit 60 robot data indicating the operation state of the robot 10 moved in accordance with an operation of the coating device 42, and a data processing unit 136 for associating the coating data indicating the operation state of the coating device 42 with the robot data acquired by the robot information acquisition unit 134 and storing the data in a storage unit 162.

The coating control apparatus 70 utilizes various coating data related to coating when controlling the coating device 42 to be controlled. Therefore, when the coating data and the robot data are stored in association with each other, data transfer can be simplified if data relating to the operation of the robot at the time of coating is acquired from the robot control apparatus 60, rather than if the coating data is transmitted to the robot control apparatus 60 and the robot control apparatus 60 associates the coating data with each other when the coating data is stored. Further, in the coating control apparatus 70, rather than the coating control apparatus 70 and the robot control apparatus 60 individually transmitting data to another apparatus and associating the data with the other apparatus, the robot data of the robot 10 when the coating device 42 is controlled can be easily associated with the coating control apparatus 70. Therefore, it is useful for making data processing efficient when robot data is stored in association with the coating data.

The coating control apparatus 70 according to the above embodiment may further include a setting reception unit 128 for acquiring designation information indicating which of a plurality of types of coating apparatuses 40 that includes mutually different constituent devices 50 is designated as the control target apparatus, and setting information indicating a target data item for acquiring data out of the plurality of types of data items identified based on the designation information. The data processing unit 136 may store the coating data including data corresponding to the target data item indicated by the setting information in the storage unit 162 in association with the robot data. In this case, since the coating data can be collected for the set data items, the coating data to be collected can be changed among the coating apparatuses 40 of different types according to the type to be used. Therefore, it is useful for general-purpose use of the coating control apparatus 70.

In the above-described embodiment, the robot data may include data indicating the operation command of the apparatus included in the robot 10 when the robot 10 is moved in accordance with an operation of the coating device 42. In this case, it is possible to grasp the operation of the robot when the coating data is obtained from the stored robot data.

In the coating control apparatus 70 according to the above embodiment, the robot information acquisition unit 134 may acquire workpiece information indicating the type of the workpiece W to be coated from the robot control apparatus 60. The data processing unit 136 may further store the workpiece information in the storage unit in association with the coating data. Based on the stored data, it is possible to grasp the type of workpiece When the coating data is obtained.

The control system 4 according to the above embodiment includes a coating control apparatus 70, a robot control apparatus 60, and a monitoring apparatus 90 having a storage unit 162 and monitoring the state of coating by the coating device 42 based on the coating data and the robot data stored in the storage unit 162. In this case, since the state of coating on the workpiece W is monitored from the data indicating the operation state of the coating device 42 and the operation state of the robot 10, it is useful for stabilizing the coating quality.

In the control system 4 according to the above embodiment, the monitoring apparatus 90 may further include a state determination unit 164 for determining whether or not the state of coating by the coating device 42 is normal based on at least one of the coating data and the robot data stored in the storage unit 162. In this case, since it is determined from the data indicating the operation state of the coating device 42 and the operation state of the robot 10 whether or not the coating state on the workpiece W is normal, it is more useful for stabilizing the coating quality.

In the control system 4 according to the above embodiment, the monitoring apparatus 90 may further include a position estimation unit 166 for calculating a position on the workpiece W at which the state of coating by the coating device 42 is estimated to be not normal based on the robot data stored in the storage unit 162 when the state determination unit 166 determines that the state of coating by the coating device 42 is not normal, and a notification unit 168 for notifying the determination result by the state determination unit 164 and the estimation result by the position estimation unit 166. In this case, it is useful for early detection of a portion where coating is abnormal on the workpiece W after coating has been performed.

In the control system 4 according to the above embodiment, the monitoring apparatus 90 may further include a data accumulation unit 172 for accumulating performance information in which operation data indicating at least one of the coating data and the robot data is associated with the state of coating by the coating device 42 based on the operation data, and an algorithm construction unit 176 for constructing a determination algorithm for outputting a determination result as to whether or not the state of coating by the coating device 42 is normal in response to the input of the operation data based on the performance information accumulated by the data accumulation unit 172. In this case, since the coating state is determined based on the past performance information, it is useful for improving the accuracy of the determination.

A setting apparatus 80 according to the above embodiment is provided with an apparatus designation unit 142 which designates any one of a plurality of types of coating apparatuses 40 that includes mutually different constituent devices 50 as a control target apparatus on the basis of user input indicating which one of the plurality of types of coating apparatuses 40 is to be used, an item setting unit (parameter setting unit 144) which specifies a plurality of types of data items selectable by the user in accordance with a designation result by the apparatus designation unit 142 and sets a target data item for acquiring data from the plurality of types of data items on the basis of user input indicating a target for acquiring data, and a setting transmission unit 156 which transmits a designation result by the apparatus designation unit 142 and a setting result by the item setting unit to a coating control apparatus 70 capable of controlling the plurality of types of coating apparatuses 40. In the setting apparatus 80, a selectable data item is specified in accordance with the designation result of the control target apparatus, and an item to be subjected to data acquisition is set from the data item. Therefore, the user can set the contents of data collection among different types of coating apparatuses in a similar procedure. Therefore, it is useful for simplification of the setting work for data collection.

As used herein, the term "comprise" and its variations are intended to mean open-ended terms, not excluding any other elements and/or components that are not recited herein. The same applies to the terms "include", "have", and their variations.

As used herein, a component suffixed with a term such as "member", "portion", "part", "element", "body", and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

As used herein, approximating language such as "approximately", "about", and "substantially" may be applied to modify any quantitative representation that could permissibly vary without a significant change in the final result obtained. All of the quantitative representations recited in the present application shall be construed to be modified by approximating language such as "approximately", "about", and "substantially".

As used herein, the phrase "at least one of A and B" is intended to be interpreted as "only A", "only B", or "both A and B".

Obviously, numerous modifications and variations of the present disclosure are possible in light of the above teachings. It is therefore to be understood that within the scope of the appended claims, the present disclosure may be practiced otherwise than as specifically described herein.

## Claims

1. A coating control apparatus (70) comprising:
an operation control unit (112) configured to control a coating device (42) whose position and orientation are controlled by a robot (10) in accordance with a command from a robot control apparatus (60);
a robot information acquisition unit (134) configured to acquire, from the robot control apparatus (60), robot data indicating an operation state of the robot (10); and
a data processing unit (136) configured to relate coating data which indicates an operation state of the coating device (42) to the robot data.

2. The coating control apparatus (70) according to claim 1, further comprising:
a setting reception unit (128) configured to acquire designation information indicating which of a plurality of coating apparatuses (40) that includes different devices is selected as a control target apparatus, and setting information indicating a target data item whose data is to be acquired among a plurality of data items specified based on the designation information, wherein the data processing unit (136) configured to relate the coating data which includes data corresponding to the target data item indicated by the setting information to the robot data.

3. The coating control apparatus (70) according to claim 1 or 2, wherein the robot data includes data indicating an operation command for an apparatus included in the robot (10) when the robot (10) moves in accordance with an operation of the coating device (42).

4. The coating control apparatus (70) according to any one of claims 1 to 3,
wherein the robot information acquisition unit (134) is configured to acquire workpiece information indicating a type of workpiece to be coated from the robot control apparatus (60), and
wherein the data processing unit (136) further relates the workpiece information to the coating data.

5. A coating control system comprising:
the coating control apparatus (70) according to any one of claim 1 to 4;
the robot control apparatus (60); and
a monitoring apparatus (90) which includes a storage unit (162) and is configured to monitor a state of coating performed by the coating device (42) based on the coating data and the robot data stored in the storage unit (162).

6. The coating control system according to claim 5, wherein the monitoring apparatus (90) further comprises a state determination unit (164) configured to determine whether the state of coating is normal based on at least one of the coating data and the robot data stored in the storage unit (162).

7. The coating control system according to claim 6,
wherein the monitoring apparatus (90) further comprises
a position estimation unit (166) configured to calculate a position on a workpiece at which the state of coating performed by the coating device (42) is estimated to be not normal based on the robot data stored in the storage unit (162) when the state determination unit (164) determines that the state of coating is not normal; and
a notification unit (168) configured to notify the determination result by the state determination unit (164) and the estimation result by the position estimation unit (166).

8. The coating control system according to claim 6 or 7,
wherein the monitoring apparatus (90) further comprises
a data accumulation unit (172) configured to accumulate performance information in which operation data indicating at least one of the coating data and the robot data is related to a state of coating performed by the coating device (42) based on the operation data; and
an algorithm construction unit (176) configured to construct a determination algorithm for outputting a determination result as to whether or not the state of coating is normal in response to an input of the operation data based on the performance information accumulated by the data accumulation unit (172).

9. A setting apparatus (80) for a coating control apparatus (70), comprising:
an apparatus designation unit (142) configured to select, based on a user input, a control target apparatus among a plurality of coating apparatuses (40) that includes different devices;
an item setting unit (144) configured to select, based on a user input, a target data item among a plurality of data items in accordance with the control target apparatus selected by the apparatus designation unit (142), data of the target data item being acquired; and
a setting transmission unit (156) configured to transmit a designation result by the apparatus designation unit (142) and a setting result by the item setting unit (144) to a coating control apparatus which is configured to control the plurality of coating apparatuses (40).

10. A coating control method comprising:
controlling a coating device (42) whose position and orientation are controlled by a robot (10) in accordance with a command from a robot control apparatus (60);
acquiring, from the robot control apparatus (60), robot data indicating an operation state of the robot (10); and
relating coating data which indicates an operation state of the coating device (42) to the robot data.

11. A program for causing a computer to execute the control method of claim 10.

12. A non-transitory computer readable storage medium retrievably storing a computer-executable program therein, the computer-executable program causing a computer to perform the coating control method according to claim 10.

13. The coating control apparatus according to claim 1, wherein the coating data and the robot data are stored in a storage unit (162) such that the coating data is related to the robot data.
